# EUROPEAN PATENT SPECIFICATION

(11) **EP 3 858 520 B1**
(45) Date of publication and mention of the grant of the patent: **25.09.2024**
(21) Application number: 20205435.9
(22) Date of filing: 03.11.2020
(51) Int. Cl.: B23B 5/12, B23Q 9/00, B23B 3/24

(54) **PORTABLE TURNING MACHINE**
TRAGBARE DREHMASCHINE
MACHINE DE TOURNAGE PORTABLE

(30) Priority: 31.01.2020 JP 2020014676
(43) Date of publication of application: 04.08.2021
(73) Proprietor: Mitsubishi Generator Co., Ltd., Hyogo-ku Kobe City Hyogo 652-0854 (JP)
(72) Inventor: KAWAKAMI, Masanori, Yokohama-shi, Kanagawa 220-8401 (JP); MASHIKO, Hiroyuki, Yokohama-shi, Kanagawa 220-8401 (JP); HAYAKAWA, Michiya, Yokohama-shi, Kanagawa 220-8401 (JP); WADA, Shogo, Yokohama-shi, Kanagawa 231-8715 (JP)
(74) Representative: Witte, Weller & Partner Patentanwälte mbB

(56) References cited:
- EP-A2- 2 812 140
- JP-A- 2019 018 273
- US-A- 3 253 336
- US-A- 586 514
- US-A- 971 753
- US-B2- 8 234 766

## Description

### BACKGROUND OF THE INVENTION

### 1. Field of the Invention

The present invention relates to a machine that performs corrective machining of a cylindrical or columnar to-be-machined object.

### 2. Description of the Related Art

JP-2019-18273-A (see FIG. 1 to FIG. 5) discloses an example of a portable turning machine according to the preamble of claim 1, and specifically it discloses a machine that is attached to a rotor axis of a generator and performs corrective machining of a surface (specifically, a surface that slides against a bearing) of the rotor axis. This portable turning machine includes a first stator section attached on one lengthwise side of the rotor axis, a second stator section attached on the other lengthwise side of the rotor axis, a turning mechanism section that is arranged between the first stator section and the second stator section to be able to turn around the rotor axis, and a motor that turns the turning mechanism section via a gear mechanism. The turning mechanism section includes a first support section that is arranged on one lengthwise side of the rotor axis, a second support section that is arranged on the other lengthwise side of the rotor axis, a plurality of guides that are coupled between the first support section and the second support section, a laterally shifting section that is able to shift along the plurality of guides (i.e., in the lengthwise direction of the rotor axis), a motor that shifts the laterally shifting section in the lengthwise direction of the rotor axis via a transfer mechanism, and a cutting tool that is provided to the laterally shifting section and used for corrective machining of the surface of the rotor axis.

### SUMMARY OF THE INVENTION

Meanwhile, there are some generators having a rotor axis including a pair of collector rings and a fan that is positioned between the pair of collector rings and has a diameter larger than diameters of the collector rings, for example. Surfaces of the collector rings are pressed against carbon brushes, and so there is a possibility that they experience uneven wear due to long-term use. Accordingly, there is a demand for corrective machining of the surfaces of the collector rings performed during a periodic inspection, for example. In particular, there is a demand for corrective machining of the surfaces of the collector rings performed while the rotor axis of the generator is kept installed in place because taking the rotor axis out of the generator requires time and effort.

As possible configurations of a machine that performs corrective machining of collector rings while a rotor axis of a generator is kept installed in place, there is a configuration by which corrective machining of collector rings is performed with a stationary tool while the rotor axis of the generator is kept turning. However, in this case, corrective machining of the collector rings cannot be performed unless the generator is in a state where it can run during a period of a periodic inspection, for example. That is, the timing for corrective machining of the collector rings is limited, and it is difficult to secure the schedule therefor (several days, for example). Alternatively, there is a possibility that the period of a periodic inspection is prolonged in order to secure the schedule for corrective machining of collector rings, and the return of the generator to its running is delayed.

In view of this, as possible configurations of a machine that performs corrective machining of collector rings while the rotor axis of the generator is kept installed in place, there is a configuration like the one described in JP-2019-18273-A in which a tool is turned. However, if there is a fan (interfering object) with a diameter larger than the diameters of collector rings (to-be-machined objects) as mentioned above, it is difficult to attach a machine to the rotor axis as in JP-2019-18273-A. Alternatively, it is difficult to perform corrective machining of both of the collector rings.

The present invention has been made in view of the matters described above, and one of the objects of the present invention is to make it possible to easily perform corrective machining of a to-be-machined object even in a case where there is an interfering object with a diameter larger than a diameter of the to-be-machined object.

In order to achieve the object described above, the present invention suggest the portable turning machine defined in Claim 1. Further advantageous features are set out in Claim 2.

The present invention makes it possible to easily perform corrective machining of a to-be-machined object even in a case where there is an interfering object with a diameter larger than a diameter of the to-be-machined object.

### BRIEF DESCRIPTION OF THE DRAWINGS

FIG. 1 is a front view representing a structure of a generator that is equipment including to-be-machined objects in one embodiment according to the present invention;
FIG. 2 is a front view representing a structure of a portable turning machine in the one embodiment according to the present invention;
FIG. 3 is a top view representing the structure of the portable turning machine in the one embodiment according to the present invention;
FIG. 4 is a side view representing the structure of the portable turning machine in the one embodiment according to the present invention;
FIG. 5 is a side view representing the structure of the portable turning machine in the one embodiment according to the present invention, and illustrates a state where a ring base and a turning ring have been divided; and
FIG. 6 is a front view representing a structure of the portable turning machine in one modification example according to the present invention.

### DESCRIPTION OF THE PREFERRED EMBODIMENT

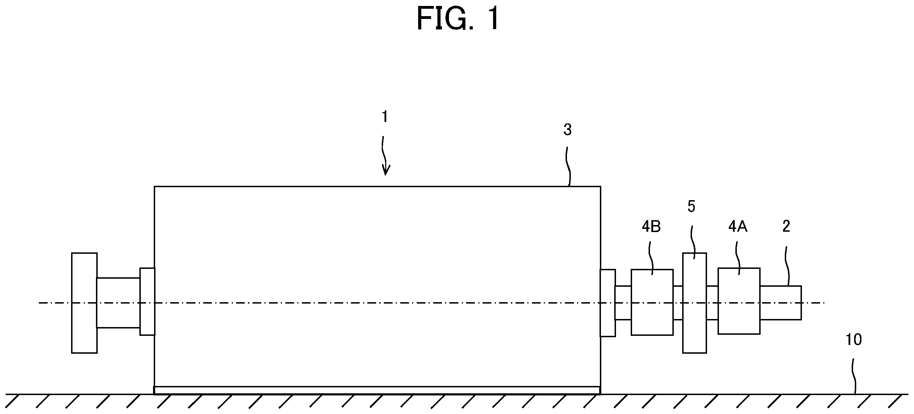

One embodiment according to the present invention is explained by using FIG. 1 to FIG. 5.

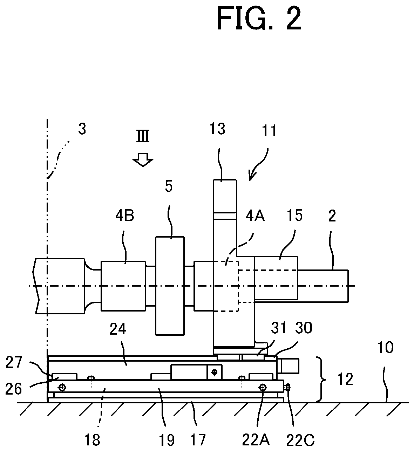

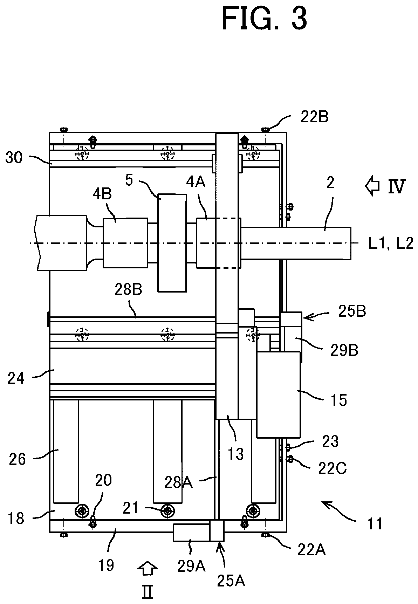

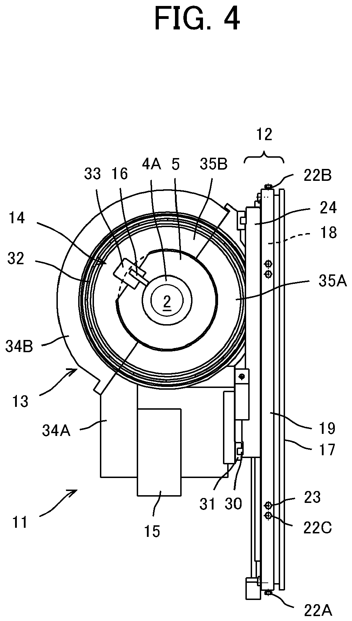

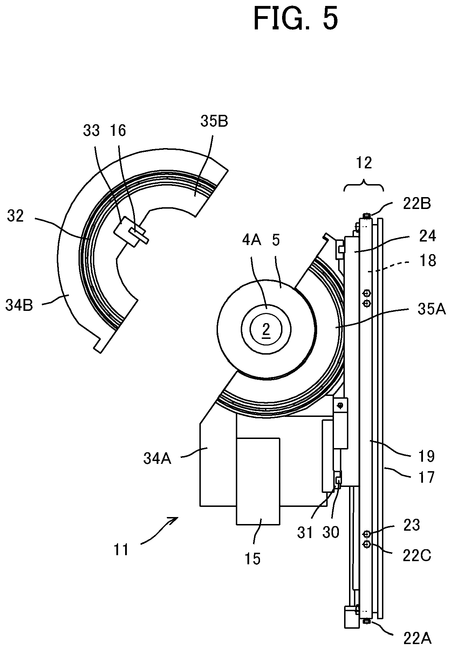

FIG. 1 is a front view representing a structure of a generator that is equipment including to-be-machined objects in the present embodiment. FIG. 2 is a front view representing a structure of a portable turning machine in the present embodiment (a view as seen in a direction of arrow II in FIG. 3). FIG. 3 is a top view representing the structure of the portable turning machine in the present embodiment (a view as seen in a direction of arrow III in FIG. 2). FIG. 4 is a side view representing the structure of the portable turning machine in the present embodiment (a view as seen in a direction of arrow IV in FIG. 3). FIG. 5 is a side view representing the structure of the portable turning machine in the present embodiment, and illustrates a state where a ring base and a turning ring have been divided.

The equipment in the present embodiment is a generator 1 installed on a floor 10. The generator 1 includes a rotor axis 2 extending in a horizontal direction, a rotor coil etc. (not illustrated) provided to the rotor axis 2, a stator frame 3, and a stator coil etc. (not illustrated) provided to the stator frame 3 and arranged on an outer circumference side of the rotor. The rotor axis 2 of the generator 1 includes a pair of collector rings 4A and 4B and a fan 5 that is positioned between the collector rings 4A and 4B and has a diameter larger than diameters of the collector rings 4A and 4B.

A portable turning machine 11 in the present embodiment performs corrective machining of the collector rings 4A and 4B (cylindrical to-be-machined objects) while the rotor axis 2 of the generator 1 is kept installed in place. The portable turning machine 11 includes a support 12 placed on and fixed to the floor 10, a ring base 13 supported by the support 12, a turning ring 14 that is turnably supported by the ring base 13 and arranged on an outer circumference side of the collector ring 4A or 4B, a motor 15 for turning ring that turns the turning ring 14, and a tool 16 that is attached to the turning ring 14 and is used for performing corrective machining of the collector ring 4A or 4B.

The support 12 includes a base plate 17 that is placed on the floor 10 and fixed thereto by using a plurality of fixing members (not illustrated), a machine bed 18 placed above the base plate 17, a leveling mechanism that adjusts a level of the machine bed 18 (details thereof are mentioned below), a positioning mechanism that adjusts a position of the machine bed 18 (details thereof are mentioned below), and a plurality of clamps 20 (four clamps 20 in the present embodiment) that fix the machine bed 18 to a frame section 19 of the base plate 17.

The leveling mechanism has a plurality of screw holes (nine screw holes in the present embodiment) that are formed through the machine bed 18 and penetrate the machine bed 18 in an upward/downward direction and a plurality of leveling bolts 21 (nine leveling bolts 21 in the present embodiment) each of which is screwed through one of the plurality of screw holes. Then, lengths of protruding sections of the leveling bolts 21 that protrude from a lower surface of the machine bed 18 and abut on a top surface of the base plate 17 can be adjusted. Thereby, the level of the machine bed 18 can be adjusted such that a turning center line L2 of the turning ring 14 is at the same level as a turning center line L1 of the rotor axis 2 of the generator 1.

The positioning mechanism has a plurality of first screw holes (two first screw holes in the present embodiment) that are formed on a front side (a lower side in FIG. 3) of the frame section 19 of the base plate 17 and penetrate the frame section 19 in a forward/backward direction (an upward/downward direction in FIG. 3), a plurality of front centering bolts 22A (two front centering bolts 22A in the present embodiment) each of which is screwed through one of the plurality of first screw holes, a plurality of second screw holes (two second screw holes in the present embodiment) that are formed on a rear side (an upper side in FIG. 3) of the frame section 19 of the base plate 17 and penetrate the frame section 19 in the forward/backward direction, and a plurality of rear centering bolts 22B (two rear centering bolts 22B in the present embodiment) each of which is screwed through one of the plurality of second screw holes.

In addition, the positioning mechanism has a plurality of third screw holes (two third screw holes in the present embodiment) that are formed on a right side (a right side in FIG. 3) of the frame section 19 of the base plate 17 and penetrate the frame section 19 in a leftward/rightward direction (a leftward/rightward direction in FIG. 3), a plurality of right centering bolts 22C (two right centering bolts 22C in the present embodiment) each of which is screwed through one of the plurality of third screw holes, a plurality of fourth screw holes (two fourth screw holes in the present embodiment) that are formed on the right side of the frame section 19 of the base plate 17 and penetrate the frame section 19 in the leftward/rightward direction, a plurality of fifth screw holes (two fifth screw holes in the present embodiment) each of which corresponds to one of the plurality of fourth screw holes and is formed on a right portion of the machine bed 18, and a plurality of right pull bolts 23 (two right pull bolts 23 in the present embodiment) each of which is screwed through both one of the fourth screw holes and one of the fifth screw holes. Note that a reason why not left centering bolts but the right pull bolts 23 are provided is for avoiding interference with the stator frame 3 of the generator 1 (see FIG. 2).

Then, the front centering bolts 22A protrude from the frame section 19 of the base plate 17 to press a front surface of the machine bed 18, the rear centering bolts 22B protrude from the frame section 19 of the base plate 17 to press a rear surface of the machine bed 18, the right centering bolts 22C protrude from the frame section 19 of the base plate 17 to press a right surface of the machine bed 18, or the right pull bolts 23 pull the right portion of the machine bed 18. Thereby, the position of the machine bed 18 can be adjusted such that the turning center line L2 of the turning ring 14 becomes parallel to the turning center line L1 of the rotor axis 2 of the generator 1.

The support 12 further includes a saddle 24 that is provided above the machine bed 18 and supports the ring base 13, a shifting mechanism 25A that shifts the saddle 24 in the forward/backward direction relative to the machine bed 18, and a shifting mechanism 25B that shifts the ring base 13 in the leftward/rightward direction relative to the saddle 24.

A plurality of protruding sections 26 (three protruding sections 26 in the present embodiment) extending in the forward/backward direction are formed above the machine bed 18, and a plurality of groove sections 27 (three groove sections 27 in the present embodiment) each corresponding to one of the plurality of protruding sections 26 are formed below the saddle 24. Thereby, the saddle 24 is able to shift in the forward/backward direction relative to the machine bed 18. The shifting mechanism 25A has a ball screw 28A extending in the forward/backward direction and a servomotor 29A that turns the ball screw 28A. The ball screw 28A includes a screw axis and a nut through which the screw axis is screwed via a plurality of balls, and the nut is coupled with the saddle 24. Then, the saddle 24 shifts in the forward/backward direction along with the turning of the ball screw 28A. As a result, the ring base 13 shifts in the forward/backward direction (i.e., in a horizontal direction orthogonal to the turning center line L2 of the turning ring 14).

The saddle 24 is provided with a plurality of rails 30 (three rails 30 in the present embodiment) extending in the leftward/rightward direction and a plurality of sliders 31 (three sliders 31 in the present embodiment) each of which is able to shift along one of the plurality of rails 30, and the plurality of sliders 31 are coupled with the ring base 13. Thereby, the ring base 13 is able to shift in the leftward/rightward direction relative to the saddle 24. The shifting mechanism 25B has a ball screw 28B extending in the leftward/rightward direction and a motor 29B that turns the ball screw 28B. The ball screw 28B includes a screw axis and a nut through which the screw axis is screwed via a plurality of balls, and the nut is coupled with the ring base 13. Then, the ring base 13 shifts in the leftward/rightward direction (i.e., in a horizontal direction parallel to the turning center line L2 of the turning ring 14) along with the turning of the ball screw 28B.

The turning ring 14 is turnably supported by a plurality of bearings 32 (eight bearings 32 in the present embodiment) that are arranged spaced apart in a circumferential direction of the ring base 13. The motor 15 for turning ring turns the turning ring 14 via a gear mechanism which is not illustrated. The turning ring 14 is provided with a tool holder 33 to which the tool 16 is able to be attached detachably. The tool holder 33 is able to adjust a position of the tool 16 in a radial direction of the turning ring 14. The tool 16 is, for example, a cutting tool, a polishing tool, a vanishing tool, or the like and is used for performing corrective machining of a surface of the collector ring 4A or 4B.

Here, as one of the most characteristic features of the present embodiment, the ring base 13 and the turning ring 14 each have a structure that is dividable into a lower portion and an upper portion. Explaining specifically, the ring base 13 has a structure that is dividable into a lower dividable type ring base 34A and an upper dividable type ring base 34B along a dividing line that is inclined to the horizontal direction. The lower dividable type ring base 34A is coupled to the plurality of sliders and nuts that are mentioned above. The upper dividable type ring base 34B is coupled to the lower dividable type ring base 34A by using a first coupling bolt which is not illustrated. The turning ring 14 has a structure that is dividable into a lower dividable type turning ring 35A and an upper dividable type turning ring 35B along a dividing line that is the same as that for the ring base 13. The tool holder 33 mentioned above is provided to the upper dividable type turning ring 35B. The upper dividable type turning ring 35B is coupled to the lower dividable type turning ring 35A by using a second coupling bolt which is not illustrated.

Next, operation and action/effects of the present embodiment are explained.

The portable turning machine 11 performs corrective machining of the collector rings 4A and 4B while the rotor axis 2 of the generator 1 is kept installed in place. At a preparatory step, the support 12 is placed on and fixed to the floor 10. Then, the ring base 13, the turning ring 14, and the like are assembled such that positions of the ring base 13 and the turning ring 14 align with a position of the collector ring 4A. Then, the level and the position of the machine bed 18 included in the support 12 are adjusted, and the level and the position of the turning center line L2 of the turning ring 14 are adjusted. Then, the turning ring 14 is turned to perform corrective machining of the collector ring 4A.

After completion of the corrective machining of the collector ring 4A, a known stopper mechanism is used to stop the turning of the turning ring 14 such that the dividing line of the turning ring 14 and the dividing line of the ring base 13 match. Then, the lower dividable type ring base 34A and the lower dividable type turning ring 35A are coupled by using a first coupling jig which is not illustrated, and the upper dividable type ring base 34B and the upper dividable type turning ring 35B are coupled by using a second coupling jig which is not illustrated. Then, the first and second coupling bolts are removed to separate the lower dividable type ring base 34A and the upper dividable type ring base 34B, and separate the lower dividable type turning ring 35A and the upper dividable type turning ring 35B. Then, the upper dividable type ring base 34B and the upper dividable type turning ring 35B are hung up, and then the lower dividable type ring base 34A and the lower dividable type turning ring 35A are shifted to align with a position of the collector ring 4B.

At this time, in a case where an outer diameter dimension of the fan 5 is smaller than an internal diameter dimension of the lower dividable type turning ring 35A as illustrated in FIG. 4 and FIG. 5, the lower dividable type ring base 34A and the lower dividable type turning ring 35A have to be shifted only leftward. Interference between the upper dividable type turning ring 35B and the tool holder 33, and the fan 5 can be avoided because the upper dividable type ring base 34B and the upper dividable type turning ring 35B are separated. On the other hand, in a case where the outer diameter dimension of the fan 5 is slightly larger than the internal diameter dimension of the lower dividable type turning ring 35A, the lower dividable type ring base 34A and the lower dividable type turning ring 35A have only to be shifted forward, leftward, and backward in this order. Interference between the lower dividable type ring base 34A and the lower dividable type turning ring 35A, and the collector ring 4A can be avoided easily because the dividing lines of the ring base 13 and the turning ring 14 are inclined to the horizontal direction.

After positions of the lower dividable type ring base 34A and the lower dividable type turning ring 35A get aligned with the position of the collector ring 4B, the upper dividable type ring base 34B and the upper dividable type turning ring 35B are hung down, the lower dividable type ring base 34A and the upper dividable type ring base 34B are coupled by using the first coupling bolt, and the lower dividable type turning ring 35A and the upper dividable type turning ring 35B are coupled by using the second coupling bolt. Then, the first and second coupling jigs are removed to separate the lower dividable type ring base 34A and the lower dividable type turning ring 35A, and separate the upper dividable type ring base 34B and the upper dividable type turning ring 35B. Then, the turning ring 14 is turned to perform corrective machining of the collector ring 4B.

In the manner mentioned above, in the present embodiment, corrective machining of the collector rings 4A and 4B can be performed easily even in a case where there is the fan 5 with a diameter larger than the diameters of the collector rings 4A and 4B.

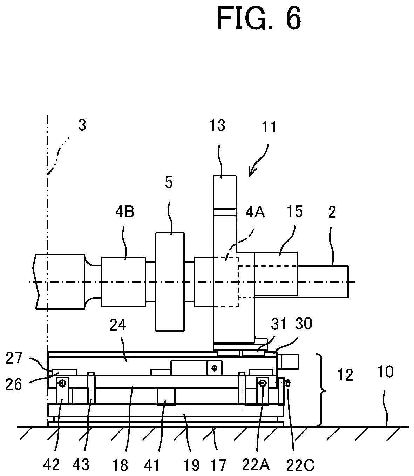

Note that although the support 12 has the leveling mechanism that adjusts the level of the machine bed 18 in the example case explained in the one embodiment described above, this is not the sole example, and a height-raising mechanism that raises the level of the machine bed 18 may further be attached. Such a modification example is explained by using FIG. 6. FIG. 6 is a front view representing a structure of the portable turning machine in the present modification example. Note that portions in the present modification example that are equivalent to their counterparts in the one embodiment described above are given the same reference symbols, and explanations thereof are omitted as appropriate.

The height-raising mechanism in the present modification example has a plurality of spacer blocks 41 for mechanical bed (nine spacer blocks 41 for mechanical bed in the present modification example), a plurality of spacer blocks 42 for leveling bolt (six spacer blocks 42 for leveling bolt in the present modification example), and a plurality of spacer blocks 43 for clamp (four spacer blocks 43 for clamp in the present modification example). Each of the nine spacer blocks 41 for mechanical bed is attached at a position that is between the top surface of the base plate 17 and the lower surface of the machine bed 18 and corresponds to one of the nine leveling bolts 21. Each of four spacer blocks 42 for leveling bolt is attached at a position that is on an upper side of the frame section 19 of the base plate 17 and corresponds to one of the two front centering bolts 22A and two rear centering bolts 22B. Each of two spacer blocks 42 for leveling bolt is attached at a position that is on the upper side of the frame section 19 of the base plate 17 and corresponds to one of the two sets of the right centering bolt 22C and the right pull bolt 23. A screw hole through which a front centering bolt 22A, a rear centering bolt 22B, a right centering bolt 22C, or a right pull bolt 23 is screwed is formed through each spacer block 42 for leveling bolt. The four spacer blocks 43 for clamp are attached at positions that are on the upper side of the frame section 19 of the base plate 17 and correspond to the clamps 20.

According to the present modification example, it is possible to cope with various heights of the rotor axis 2 by changing heights of the spacer blocks 41 for mechanical bed, the spacer blocks 42 for leveling bolt, and the spacer blocks 43 for clamp.

In addition, although the portable turning machine 11 performs corrective machining of the surfaces of the collector rings 4A and 4B (cylindrical to-be-machined objects) in the example case explained in the one embodiment described above, this is not the sole example. For example, corrective machining of a surface of the rotor axis 2 (columnar to-be-machined object) may be performed.

## Claims

1. A portable turning machine (11) comprising:
a support (12) placed on and fixed to a floor (10);
a ring base (13) supported by the support;
a turning ring (14) that is turnably supported by the ring base and arranged on an outer circumference side of a cylindrical or columnar to-be-machined object (4A; 4B);
a motor (15) for the turning ring that is adapted to turn the turning ring; and
a tool (16) that is attached to the turning ring and is adapted to be used for performing corrective machining of the to-be-machined object, wherein
the ring base and the turning ring each have a structure that is dividable into a lower portion (34A; 35A) and an upper portion (34B; 35B),
**characterised in that**
the support has
a first shifting mechanism (25A) adapted to shift the ring base in a first horizontal direction orthogonal to a turning center line of the turning ring, and
a second shifting mechanism (25B) adapted to shift the ring base in a second horizontal direction parallel to the turning center line of the turning ring.

2. The portable turning machine according to claim 1, wherein the ring base (13) and the turning ring (14) each have a structure that is dividable into the lower portion (34A; 35A) and the upper portion (34B; 35B) along a dividing line that is inclined to a horizontal direction.

## Patentansprüche

1. Tragbare Drehmaschine (11), die aufweist:
eine Stütze (12), die auf und an einem Boden (10) befestigt ist;
eine Ringbasis (13), die von der Stütze getragen wird;
einen Drehring (14), der drehbar von der Ringbasis unterstützt wird und an einer äu-ßeren Umfangsseite eines zylindrischen oder säulenförmigen zu bearbeitenden Objekts (4A; 4B) angeordnet ist;
einen Motor (15) für den Drehring, der dazu angepasst ist, den Drehring zu drehen; und
ein Werkzeug (16), das am Drehring befestigt ist und dazu angepasst ist, zur Durchführung von korrigierender Bearbeitung des zu bearbeitenden Objekts verwendet zu werden,
wobei die Ringbasis und der Drehring jeweils eine Struktur aufweisen, die in einen unteren Teil (34A; 35A) und einen oberen Teil (34B; 35B) teilbar ist,
**gekennzeichnet dadurch, dass**
die Stütze
einen ersten Verschiebemechanismus (25A) aufweist, der dazu angepasst ist, die Ringbasis in einer ersten horizontalen Richtung senkrecht zu einer Drehmittellinie des Drehrings zu verschieben, und
einen zweiten Verschiebemechanismus (25B) aufweist, der dazu angepasst ist, die Ringbasis in einer zweiten horizontalen Richtung parallel zu der Drehmittellinie des Drehrings zu verschieben.

2. Tragbare Drehmaschine nach Anspruch 1, wobei die Ringbasis (13) und der Drehring (14) jeweils eine Struktur aufweisen, die in den unteren Teil (34A; 35A) und den oberen Teil (34B; 35B) entlang einer Trennlinie teilbar ist, die zu einer horizontalen Richtung geneigt ist.

## Revendications

1. Tour portable (11) comprenant :
un support (12) placé et fixé sur un plancher (10) ;
une base annulaire (13) supportée par le support ;
un anneau tournant (14) qui est supporté de manière tournante par la base annulaire et disposé sur un côté d'une circonférence externe d'un objet à usiner cylindrique ou colonnaire (4A ; 4B) ;
un moteur (15) pour l'anneau tournant qui est adapté pour faire tourner l'anneau tournant ; et
un outil (16) qui est attaché à l'anneau tournant et est adapté pour être utilisé pour effectuer un usinage correctif de l'objet à usiner, dans lequel
la base annulaire et l'anneau tournant ont chacun une structure qui peut être divisée en une partie inférieure (34A ; 35A) et une partie supérieure (34B ; 35B),
**caractérisé en ce que**
le support a
un premier mécanisme de déplacement (25A) adapté pour déplacer la base annulaire dans une première direction horizontale orthogonale à une ligne médiane de rotation de l'anneau tournant, et
un second mécanisme de déplacement (25B) adapté pour déplacer la base annulaire dans une seconde direction horizontale parallèle à la ligne médiane de rotation de l'anneau tournant.

2. Tour portable selon la revendication 1, dans lequel la base annulaire (13) et l'anneau tournant (14) ont chacun une structure qui peut être divisée en partie inférieure (34A ; 35A) et partie supérieure (34B ; 35B) le long d'une ligne de division qui est inclinée par rapport à une direction horizontale.
